# EUROPEAN PATENT APPLICATION

(11) **EP 1 054 547 A2**
(43) Date of publication of application: **22.11.2000**
(21) Application number: 00304150.6
(22) Date of filing: 17.05.2000
(51) Int. Cl.: H04L 29/06

(54) **An interface apparatus and method**

(30) Priority: 20.05.1999 GB 9911779
(71) Applicant: Virtual Access Ireland Limited, Dublin 2 (IE)
(72) Inventor: Brankin, Henry, Delgany, County Wicklow (IE)
(74) Representative: Collins, John David

(57) **Abstract**

An interface is provided between one or more clients and a server connected via a communications line. The interface receives requests from the client for information from the server and the passage of the requests to the server are controlled in accordance with predetermined criteria. When requests are not passed to the server from the client, a response is generated by the interface to the client which indicates that no information is available from the server.

## Description

The present invention generally relates to an information system in which one or more clients request information over a communications line from an information server. The present invention is particularly although not exclusively applicable to the control of polling of information from the server by clients.

In information systems it is common for information to be provided at a server remote from one or more clients which wish to access the information. The remote connection between the clients and the server is made using a communications line such as a telecommunications link. With the prevalent use of the internet in information systems, a server can be connected to the internet and thus the communications link from the clients connects to the internet. Thus the connection between the clients and the server includes a communications link into the internet.

Many client applications operated by computers regularly request updated information from the server. Such regular requests or polls can take place at intervals of as little as 5 minutes. The problem that this creates is that the client applications can cause a communications connection to be made to the server every time a request is made for information. This incurs a communications costs either directly as a financial cost, or where the financial cost of the communications connection is not quantifiable or relevant, as a cost in terms of the communications traffic i.e. regular requests for information which may not be available at the server take up communications bandwidth. There is thus a cost in allowing client applications to regularly poll a server to request for any updated information which the server may not have.

There are many examples of such client applications. For example Pointcast™ is an application which regularly polls a Pointcast server over the internet to obtain updated information in the form of the latest news etc. Another such client application is Backweb™. A further example is the Microsoft Active Channel feature which causes the Microsoft Explorer™ browser to periodically check for updates over the internet for as long as the browser is loaded. Thus in other words the browser will periodically make connections in order to request any updated information from the server. Yet a further example is the ICQ application for chat sessions over the internet which, when a client machine is logged on, polls the remote server to determine who else is logged on to enable a chat session to be opened or joined.

A more well known type of client application which regularly polls a remote server over a communications line to retrieve information is electronic mail (email). Email is now extensively used by companies who have a large number of users networked over a local area network (LAN). When a company has an email server connected to the LAN, they do not experience problems of incurring communications costs because the server is locally provided and connected over the LAN. However, some companies have more than one office. If a company wishes to use a single domain name for email, e.g. thecompany.com, this must be hosted by a single email server. If this is placed in one office (e.g. a central office) there is a problem of how to allow the other office (e.g. a local office) of the company to access the email which is stored on the server.

When requests for emails are transmitted from the local office to the server in the central office, a communications connection must be made for the requests to be transmitted. Such a connection using a telecommunications link incurs a financial cost. Even where a leased line is used, although there is no financial cost, there is a band width cost for repeatedly sending the requests for emails.

One solution to this problem is to provide the other office with a local proxy email server which retrieves the email for the members of the local office from the remote server and makes it available over the local area network of that office. When a proxy server is used, this local server becomes the scheduler for polling a remote server to retrieve email for the local office. The polls take place at less frequent intervals than are normally carried out by an email client. This is an efficient use of the communications bandwidth since there are less frequent requests and in view of the number of email clients in the local office, the requests usually result in emails being transferred. The proxy server synchronises polls by polling all users mail boxes one immediately after the other. The number of connections made over a communications line are thus reduced. The problem with this solution is that a second server is required and there is an administrative overhead in maintaining such a server. Also, because the proxy server holds all of the email for the office, when a member of the office is away from the office and wishes to access the email, it is not possible to do so unless the office provides a dial-up facility or a method of accessing the proxy server via the internet. Once again such a configuration is subject to an administrative overhead and an increase in the complexity of the office email system.

Another solution to this problem is to prevent the email client applications from regularly polling the email server. Email can only be requested from the server as a result of a positive action by a user of the client to request data. This solution is however, inconvenient since it requires a user to remember to check their email regularly.

As an alternative to a company owning its own server and locating this within one office, a company (or user) can subscribe to an Internet Service Provider (ISP) who maintains an email server for the client. This operates in very much the same way as described hereinabove except that the central "office" comprises the remote ISP. Thus the problem of communications costs still applies.

It is an object of the present invention to provide an arrangement for reducing communications costs by controlling when the requests for information from a client application are transmitted over a communications line to a server.

A first aspect of the present invention addresses this problem of controlling the requests for information from one or more clients to a server over a communication line by using an interface which allows the passage of requests and hence the making of communications connections to the server apparatus in accordance with predetermined criteria. When the criteria are not met and a request is not allowed to pass to the server, the interface generates a response indicating that no information is available from the server. Thus the interface spoofs a response to make the client believe that the server has responded indicating that no information is available.

The ability of the present invention to generate a response which makes the client believe that there is no data prevents errors being returned. The interface thus simulates the functionality of the server to respond to the client. In the prior art it is known for filters to be used to filter out requests. However, because no response is then forthcoming to a request from a client, the client will assume that there is an error. The generation of errors is inconvenient and can cause concern to the user of the client. This problem is avoided in this aspect of the invention.

The present invention is applicable to any client which requests information from a server over a communications line. The provision of the interface between the client and the server allows for independent control of the use of the communications line.

The interface does not act as a true proxy server because it does not store the information. Proxy servers typically poll the information from the server and store it temporarily pending collection by the client. The interface does however act as a server in that it responds to client requests indicating no information is stored at the server (even though there may be) when connections are not allowed to be made to the server by the client making the request.

A client and a server can comprise any apparatus configured to perform the functionability of a client and a server respectively. In a computer system a client usually comprises an application (computer program) running on a computer (the client machine). Similarly, a server comprises a server application running on a computer (the server machine). Because computers are able to perform multiple tasks a machine is capable of hosting more than one client or server.

The predetermined criteria used to control access to the communications line can comprise one or more of a number of different criteria. For example, where one or more clients regularly polls the server very frequently, access to the communications line can be controlled in accordance with a predetermined pattern. For example, regular "windows" of time can be provided during which access to the communications line is available to allow requests to be communicated to the server. During periods when the "window" is not open, the interface generates responses to requests indicating that no information is available. Of course, the requests which are transmitted to the server may still result in responses indicating that no information is available when the server has no information to give to the client, e.g. when the information comprises an email, a request for email from an email server may result in a response that there is no email and when the server has no email for the client. If there is information on the server for the client, whilst the communication connection is still open, information from the server is transferred to the client in response to the request.

An advantage of this technique is that the polls are synchronised into the polling window. Polls from multiple clients which can be at any time are only passed on to the server when the window is open. This avoids connections being made frequently because of the lack of synchronisation of the request.

In addition to the use of a window as a predetermined criteria for allowing access to a communications line, where more than one client is connected to the interface e.g. by a LAN, one or more of the clients may have a privileged status. The privilege status allows the client to access the server over the communications line at any time, thus overriding the time pattern constraints for other clients.

Another predetermined criteria which can be used additionally or independently is dependent upon when a client last successfully retrieved information in response to a query. One way of using this "log" information is to only allow a request from a client for information from a server to be passed over to the communications line when a request has been made after a predetermined period of time has elapsed since the most recent successful retrieval of information in response to a request. This predetermined criteria ensures that connections made over the communications line to the server are not made overly frequently. Another way of using this information is, when a request is made for the first time in a period of time, e.g. for the first time in a day such as when a worker starts in the office, it is passed on to the server by the making of a connection over the communications line. One or both of these techniques can be used in combination with the windowing function to allow a user, when first loading up a client application, to make a request to the server for the retrieval of any information that may be waiting for them. For example, when the client application is an email application and when a worker first loads up the email application in the morning, email which has accumulated overnight can be requested and downloaded from the server.

Where the communications line between the interface and the server incurs a connection cost which includes a high initial cost for setting up the communication, an embodiment of the present invention can allow for the detection of activity on the communications line to determine whether a connection has already been made. When the connection has already been made, request for information from the server which are received from the clients can be allowed to pass over the communications line since no initial connection charge will be made: the connection duration can be extended. The connection to the server may be already made by other applications being run by the apparatus on which the client application is run. For example, where the client application is an email application, the apparatus may also be running a web browser which makes a connection over the communications line to a web server (which can comprise the same machine as the email server).

Another predetermined criteria which can be used to control the passage of requests over the communications line to the server is the knowledge of whether the server actually contains information for the user of a client. In this method, a notification system associated with the server communicates to the interface an indication that information is available for users at the server. Thus when requests for information are received at the interface from a client for a user, it can be determined whether there is information for the user at the server from the notification information and if so a request for the information can be passed onto the server resulting in the retrieval of the information and the passage of it to the client via the interface. Requests which are received from clients for which there are no indications that the server has information for users are not allowed to pass on to the server.

The predetermined criteria used for controlling the passage of requests and thus the number of times collections are made over the communications line to the server, can be configured in accordance with externally received configuration parameters. The interface is thus fully configurable by a remote manager. The configuration parameters can be received either via the communications line e.g. over the internet or by externally dialling into the interface, or locally from a machine connected to the interface either directly or over a LAN.

Another aspect of the present invention addresses the problem of reducing communications between a client and a server over a telecommunications network by monitoring information stored at a server for a particular user or client and transmitting a signal over a telecommunications line to signal that information for a user or client is available at the server. This system can be used either manually or automatically to control the retrieval of the information by the client from the server.

For the automatic retrieval of information by a client, the signal can be received for example by an interface to the telecommunications line and this can either cause the interface or the client application itself to issue a request for the data which is transmitted over the telecommunications line to the server. Alternatively, when a request for information is generated manually in response to receipt of a signal from a server, this can cause an indication to be generated e.g. visually or audibly to indicate to the user or client that information is available for retrieval from a server.

Embodiments of the present invention will now be described with reference to the accompanying drawings, in which:
Figure 1 is a schematic diagram of a generalised embodiment of the present invention;
Figure 2 is a schematic diagram of a system in accordance with a first embodiment of the present invention;
Figure 3 is a schematic diagram of the structure of an interface in accordance with a first embodiment of the present invention;
Figure 4 is a functional diagram of an interface in accordance with the first embodiment of the present invention;
Figure 5 is a flow diagram illustrating the method of operation of a first embodiment of the present invention;
Figure 6 is a diagram illustrating the passage of signals during a valid authentication using APOP;
Figure 7 is a diagram with a passage of signals during an invalid authentication using APOP;
Figure 8 is a diagram illustrating the passage of signals during a valid authentication using USER/PASS;
Figure 9 is a diagram illustrating the passage of signals in the local transaction state;
Figure 10 is a schematic diagram of a system of a second embodiment of the present invention; and
Figure 11 is a flow diagram of the operation of the second embodiment.

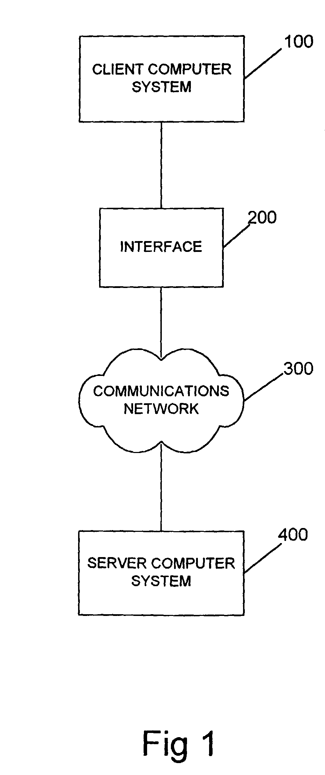

Figure 1 is a schematic diagram of the present invention in which a client computer system 100 which operates one or more client applications which require data from a remote server application is connected to an interface 200. The interface 200 is connected via a communications network 300 to a remote server computer system 400 running a server application.

In the present invention the client can comprise any client application (program) operating on a single computer or a distributed processing system e.g. a network. The client computer system 100 of Figure 1 can thus comprise a LAN with a plurality of computers connected to it. Any of the computers can implement one or more client applications.

The server computer system 400 can also comprise a single computer operating a server application holding information to be made available in response to requests to the remote client applications. The server computer system can also comprise a plurality of computers connected over a LAN with one computer on the LAN operating the server application.

The communications network 300 can comprise any form of communications network such as a telecommunications network. As a part of the connection between the interface 200 and the server computer system 400, the internet may be affectively part of the communications network. In this case the interface 200 connects to a node of the internet e.g. an Internet Service Provider. The server computer system 400 can usually be connected as a node in the internet.

The present invention is however, equally applicable to a direct telecommunications link made between the interface 200 and the server computer system 400 by the communications network 300. In such an arrangement, the server computer system 400 will also include a communications interface (not shown).

### FIRST EMBODIMENT

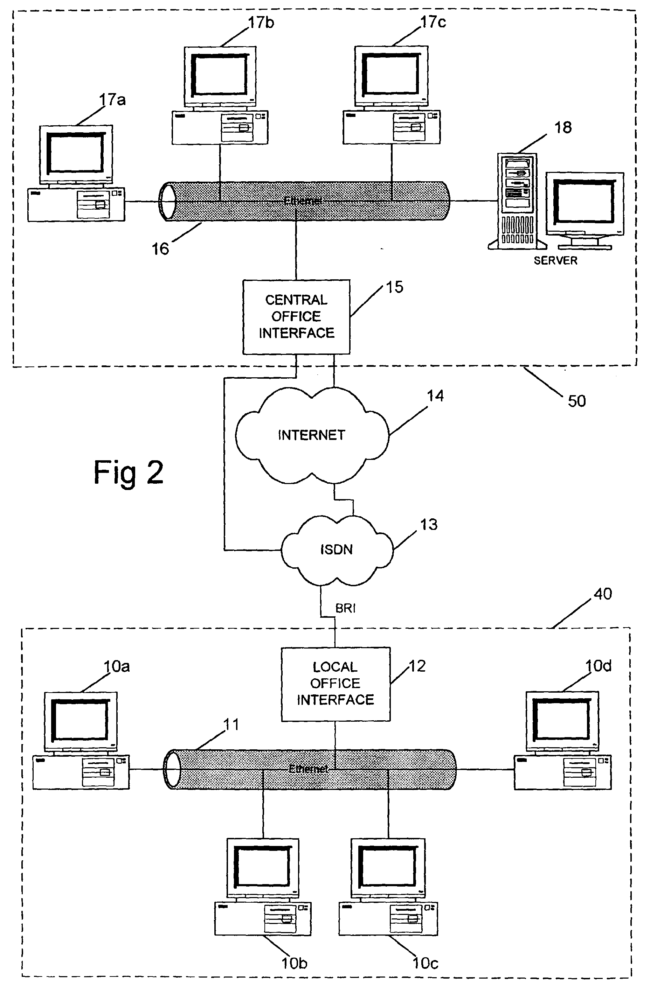

A first embodiment of the present invention will now be described with reference to Figures 2 to 9.

Figure 2 is a schematic diagram of a system using an interface of a first embodiment of the present invention in which a local office 40 contains a plurality of computers 10a, 10b, 10c and 10d operating client applications wishing to access the server 18 in a central office 50. A communication link is provided between the central office 50 and the local office 40 in the form of either a direct ISDN link via the ISDN network 13, or a link via the ISDN network 13 and the internet 14.

The central office houses the server 18 connected via a LAN (Ethernet) 16 to client computers 17a, 17b and 17c which are local to the server. An interface 15 is also provided connected to the LAN 16 and provides the connectivity between the server 18 and the internet 14. The server 18 operates an email server application and because of its connection via the interface 15 to the internet 14, it is able to receive email for both the local office 40 and the central office 50.

The protocol for the transmission of email to the server 18 over the internet is the Simplemail Transfer Protocol (SMTP). This protocol is not only a protocol for the transmission of email between email servers as it passes around the internet until it reaches its destination i.e. target server, it is also the protocol used for a client application to transmit email to the email server 18 for transmission to a destination server over the internet.

As is well known, the server 18 can implement many different applications simultaneously and may not only be implementing the email server application, but may also be implementing other server applications such as a web server application.

Within the central office 50, client applications running on any of the client machines 17a, 17b and 17c are able to access their email by regularly polling the server 18 over the LAN 16.

In the local office 40 a plurality of client machines 10a, 10b, 10c and 10d are linked over a local area network (Ethernet) 11. A local office interface 12 is also provided connected to the LAN 11 and includes a basic rate ISDN (BRI) link. Thus, in the local office 40, any one of the client machines 10a, 10b, 10c and 10d can implement an email application for reading, sending and receiving email. When email is to be sent, it is transmitted over the LAN 11 via the local office interface 12 and a connection is made over the BRI link either directly or via the internet 14 to the central office interface 50 where it there passes through the local area network 16 to the server 18. Thus for the transmission of email, the local office interface 12 does nothing more than act as an ISDN/LAN interface. Connections over the BRI line are not prevented for the transmission of email since when an email is to be transmitted, it will contain data which will make the initiation of a connection worthwhile. In contrast, requests for emails from the server 18 by the email applications running on the client machines 10a, 10b, 10c and 10d does not contain data. If there is no email at the server 18 it will return merely a response and a connection will have been made for the passage of no data.

The most commonly used protocol between an email client application and an email server application to read e-mail from a user's mailbox is the Post Office Protocol version 3 (POP3). Using such a protocol, a user of a client machine 10a, 10b, 10c or 10d will run an email client application such as Microsoft Outlook™ that periodically calls the email server 18 for received e-mails. Clearly, while there are multiple users operating multiple email client applications, there is a high degree of likelihood that the regular periodic polls will not be synchronised resulting in even more frequent requests at the local office interface 12 for connections to be made over the BRI line to the server 18. Each time a request is made, if a connection is not already in place over the BRI line, a new connection must be made. This results in frequent connections over the BRI line which can greatly increase telecommunications charges since telecommunications providers usually make a dialling charge for a connection in addition to a charge for the duration of the connection.

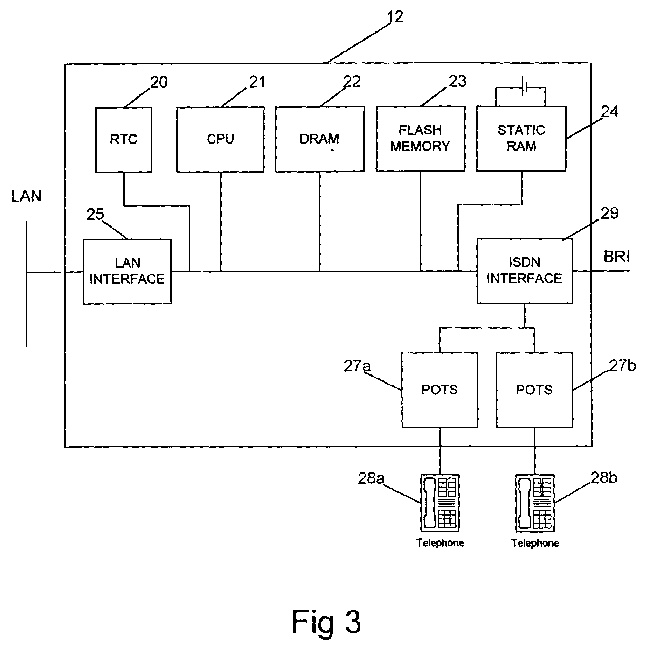

Figure 3 illustrates schematically the structure of the interface 12 in accordance with this embodiment of the present invention.

A LAN interface 25 is provided for connection to a LAN. A real time clock (RTC) 20 provides for the timing of events such as the requests made by a client application and the retrieval of data in response to requests i.e. successful requests. The central processing unit 21 implements program code stored in flash memory 23. Dynamic random access memory (DRAM) 22 is provided as the working memory to be used by the central processing unit (CPU) 21. A battery backed static RAM 24 is also provided for storing data such as log data which logs information on successful requests. Either the flash RAM 23 or the static RAM 24 can be used for storing other data such as address information for the email server, a list of privileged users, and window data as will be described in more detail hereinafter.

An ISDN interface 29 is provided for interfacing to a basic rate ISDN (BRI) line and two plain old telephone server (POTS) interfaces 27a and 27b provide two analog telephone lines (one for each of the two B channels of the BRI line) for use by telephones 28a and 28b.

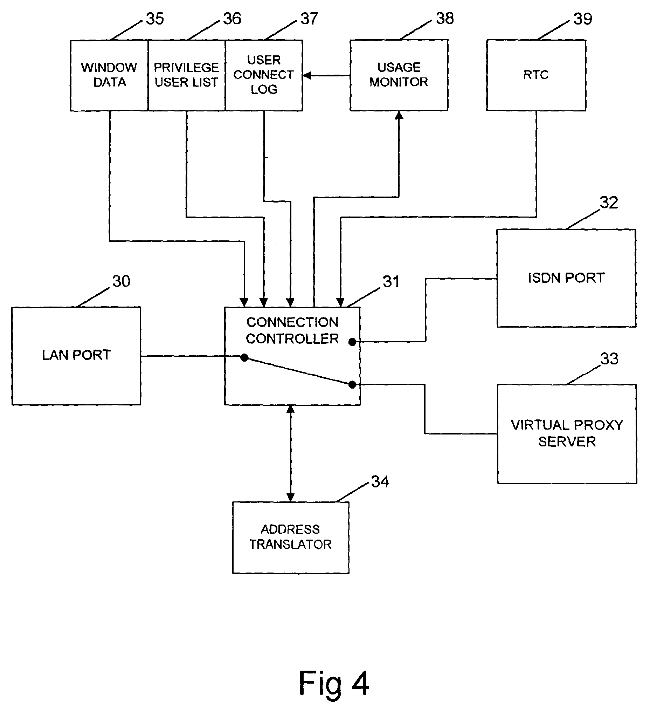

Figure 4 is a diagram of the functional features of interface 12.

A LAN port 30 receives requests for email and passes these through a connection controller 31 which determines whether to pass the request on and out through the ISDN port 32 or whether to have the requests received and responded to by a virtual proxy server 33 to spoof a response to indicate to the email client that there is no email waiting at the email server. In this embodiment of the present invention, an address translator is provided because the requests received from the email clients are addressed to the interface 12. Thus if requests are to be relayed onto the email server, the address must be translated to the address of the email server. Also when the requests for email are not be transmitted onto the email server but are instead responded to by the virtual proxy server 33, the address translator provides the address of the email server to enable the spoof response to be generated.

The connection controller 31 determines whether to allow the requests for email to pass through the ISDN port based on several parameters. Reference is made to window data 35 which indicates when a window is opened to allow polls from a client to be relayed to a server. A privileged user list 36 is referred to to compare the address from which the request came with the list of privileged users to determine whether the request should be treated as privileged. If it is to be treated as privileged, then even if the window data indicates that the window is shut, the request will be relayed to the server. A user connection log 37 is also referred to to determine whether the request should be relayed. The user connection log is built up by the usage monitor 38 which monitors successful requests for email by a user of a client. A real time clock (RTC) 39 is also referred to by the connection controller 31 in order to determine the time and thus whether the window should be open or shut. It is also used by the usage monitor 38 to enable the user connection log 37 to be built up.

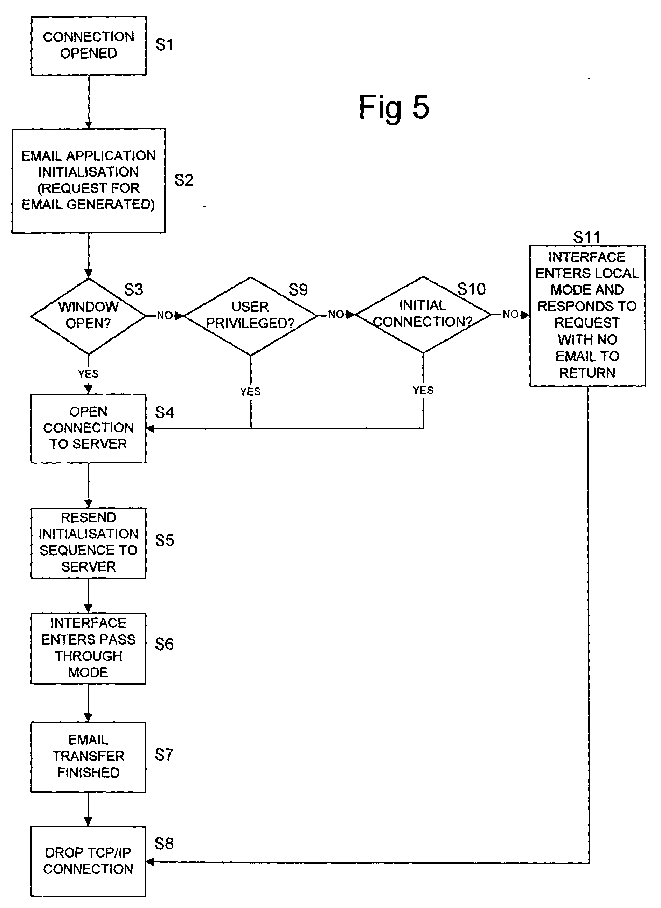

An overview of the operation of this embodiment of the present invention will now be described with reference to the flow diagram of Figure 5.

In step S1 an email client opens a connection. The email application then carries out an initialisation sequence which includes the generation of a request for email in step S2. In step S3 it is then determined whether the window is open. If it is open, in step S4 a connection is opened to the server. If not, in step S9 it is determined whether the user identified in the request is privileged. If so, in step S4 a connection is opened to the server and if not, it is then determined whether this is an initial connection after a predetermined period of time in step S10. If so, in step S4 a connection is opened to the server. If not, in step S11 the interface enters a local mode and responds to the request with no email to return and the TCP/IP connection is then dropped in step S8.

Once a connection is made to the server in step S4, because the interface in this embodiment has received the initialisation sequence, this has to be resent to the server in step S5. The interface then enters a pass through mode in step S6 wherein it relays requests and email data. In step S7 once the email transfer is finished, in step S8 the TCP/IP connection is dropped.

A description will now be given of the parameters which can affect the relaying of the polls to the server from the clients, i.e. the parameters used in the determination of steps S3, S9 and S10.

### THE POLLING WINDOW

The polling window is a window in time when polls from clients will be relayed to the server. An example might be that the window is opened every hour for 10 minutes. Hence if the clients are set to poll every 5 minutes, they will get through the window at least one per hour and retrieve their email.

The configuration parameters to the polling window are given in Table 1 below.

**TABLE 1**

| Parameter | Range | Units | Default | Descriptions |
|---|---|---|---|---|
| Window Start Time | 00:00 -23:59 | time | 00:00 | The polling window will not open before this time |
| Window End Time | 00:00 -23:59 | times | 00:00 (disabled) | The polling window will not open before this time |
| Opening Frequency (every) | 5 mins - 12 hours | mins | 60 | The polling window will open once very time this timer expires |
| Window duration | 1-60 | mins | 10 | Number of minutes the polling window will remain open |

Thus the window parameters are stored in the interface and are used to control the relaying of requests. This feature of this embodiment of the invention enables the polls transmitted to the server to be reduced significantly. Polls are only allowed through when the window is open, thus significantly reducing the number of times connections are made over the ISDN line.

### USER CONNECTION LOG

It is common for users to enter or retrieve their e-mail first thing in the morning when they start work. Hence, if they have to wait for the polling window to open it will be frustrating. In order to accommodate this, the interface allows any user who has not successfully retrieved email for a predetermined period of time to override the polling window and have their email poll relayed.

This timer can for example be set to 12 hours. So, if the last time a user retrieved their email was at 6.00pm, and the user polls email again at 8.30am, their email will be immediately relayed to the server. After this poll, they will only be able to retrieve email during the polling window for the remainder of the working day.

The configuration parameter for this feature is given in Table 2 below.

**TABLE 2**

| Parameter | Range | Units | Default | Descriptions |
|---|---|---|---|---|
| User reset delay | 0-24 hours | mins | 0 (disabled) | Any user who has not successfully retrieved their email for greater than this time will be have the poll relayed even if the window is shut. If the timer is disabled then email will only be relayed during the polling window. |

The user will be deemed to have successfully retrieved email if the client issues the quit command during the transaction relay state as will be described in more detail hereinafter. Hence, in the transaction relay state, the interface must monitor all commands from the client to determine whether the quit command is issued.

An administrator can clear the user log to allow a user's subsequent poll to be relayed immediately to the server even though they have retrieved email within the time "range" given in Table 2.

### PRIVILEGED USERS

In some organisations there might be people who have the authority to poll their email at any time. The interface contains a list of user names for whom email requests will be immediately relayed to the server. This name list can also be useful for network management staff who wish to test the operation of the server at any time without waiting for the polling window.

The parameters for this feature is given in Table 3 below.

**TABLE 3**

| Parameter | Units | Default | Descriptions |
|---|---|---|---|
| Priority Username (up to 20 user names can be entered in a table) | characters | Empty String | The user name of a user who can poll email when the polling window is shut |

### DETAILS OF THE PROTOCOL

This embodiment of the present invention uses the POP3 protocol for requesting and retrieving email from the server. The POP3 protocol will be well understood by a skilled person in the art and thus only a brief overview is given. The POP3 protocol uses TCP as the communications method between the server and the client. The server listens on Port 110 for incoming connections from clients. When the connection is established the POP3 server sends a greeting. The client and POP3 server exchange commands and responses until the connection is closed or aborted.

Commands, in the POP3 protocol consists of ASCII keyword followed by one or more arguments. Responses consist of a status indicator and a keyword possibly followed by additional information. There are two status indicators: positive "+OK" and negative "-ERR".

A POP3 session progresses through a number of states during its lifetime. Once the TCP connection has been opened and the POP3 server has sent its greeting, the sessions enters the AUTHORISATION state. In this state the client must identify itself to the server. After AUTHENTICATION the server enters the TRANSACTION state where emails can be retrieved. When the client has issued the QUIT command, the session enters the UPDATE state. In this state, the server closes the TCP connection and the session is ended. A POP3 server may have an inactivity autologout timer. Such a timer must be at least of a 10 minute duration. When the timer expires the server should close the TCP connection.

There are two main types of authentication used by POP3:
1. USER/PASS
   Using this mechanism the user name and password are passed to the POP3 server as two commands. The password is passed as clear text.
2. APOP
   Using this mechanism the user name is passed as clear text and the password is hashed along with part of the POP3 server greeting using the MD5 algorithm. Both are sent in a single APOP command.

Since the interface of this embodiment will need to know the identity of the user of the client before it connects to the server, it will not be possible for the interface to support APOP. However, as the session is relayed to the server, the session between the interface and the server may use APOP.

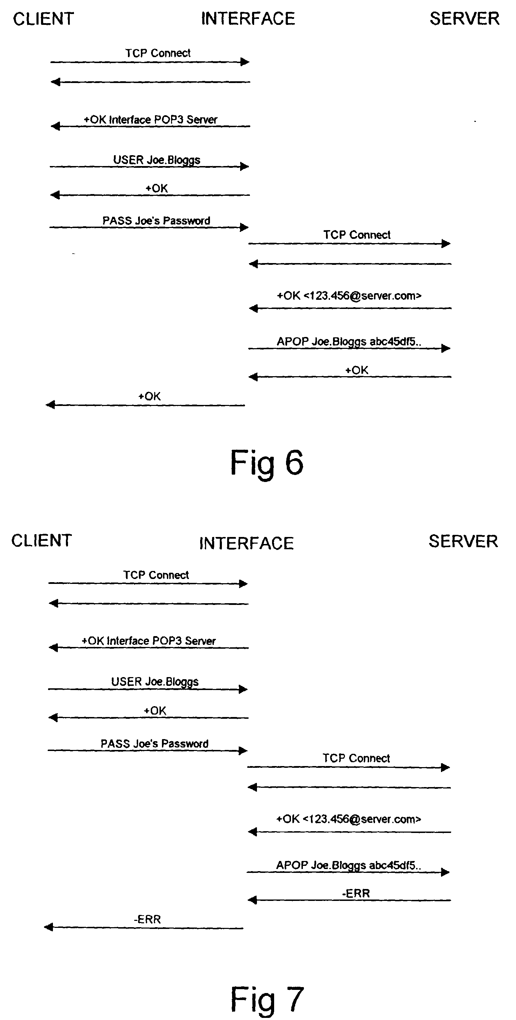

Figure 6 illustrates the passage of signals for VALID authentication using APOP. A TCP connection is initially made between the client and the interface and the interface responds with a positive response. Client then returns the user name "Joe.Bloggs" followed by the password "Joe's Password". The interface allows the request to be passed on, e.g. the window is open, the user is privileged, or the user has made an initial request, and the request is relayed to the server. Initially a TCP connection is made between the interface and the server and the server responds positively. The interface then sends the APOP authentication to which the server responds positively. The positive response is then relayed by the interface to the client.

Figure 7 illustrates the passage of signals when an INVALID authentication is returned using APOP. Figure 7 is identical to Figure 6 except that in response to the APOP authentication transmitted from the interface to the server, the server responds with a negative response "-ERR" which is relayed by the interface to the client.

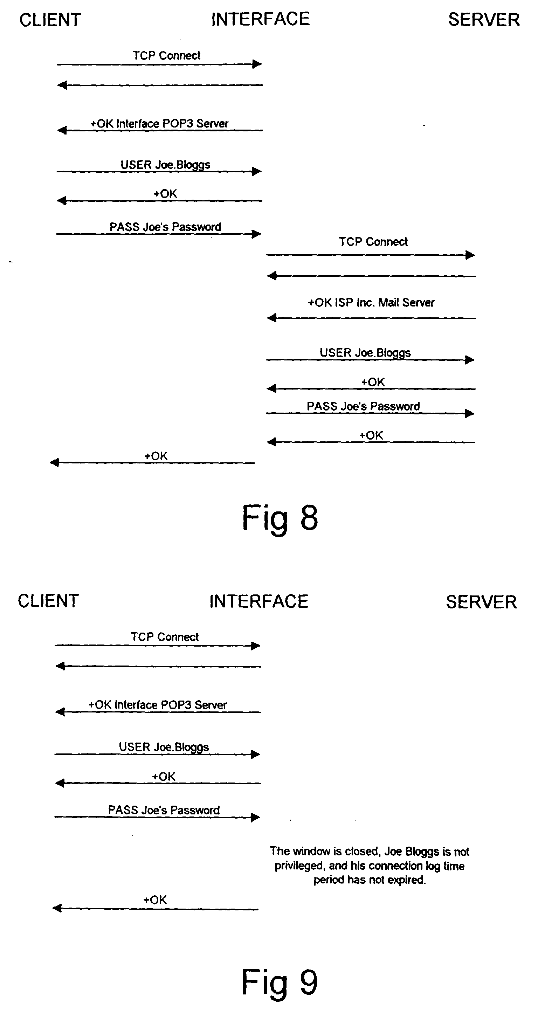

Figure 8 is an illustration of a VALID authentication using the USER/PASS authentication. In this method the client initially makes a TCP connection to the interface. The interface then responds positively. The client then returns a user name "Joe.Bloggs" followed by a user password "Joe's password". The interface is in the transaction relay state i.e. the window is open, the user is privileged, or it is an initial connection by a user, and a TCP connection is made between the interface and the server. The server then responds with a positive message and the interface relays the user name "Joe.Bloggs" followed by the user password "Joe's password" to the server. The server then responds positively and this positive response is relayed by the interface to the client.

An invalid authentication using "USER/PASS" is identical to Figure 8 except that the server, instead of returning "+OK", returns "-ERR" which is relayed to the client by the interface.

So far only the relaying of requests in the transaction relay mode from the client to the server has been considered with reference to the two different authentication techniques.

Figure 9 is a diagram of the passage of signals when the interface enters the local transaction state and does not pass on the requests to the server. The process of passing the user name and password to the interface is identical to the process carried out in Figures 6, 7 and 8. The difference is that instead of making a TCP connection to the server, the interface responds positively with the "+OK" response.

Table 4 below lists the top three protocol demands that are supported in the local transaction state.

**TABLE 4**

| **Command** | **Response** |
|---|---|
| STAT | +OK 0 0 |
| LIST +no arguments | +OK (multi-line response) |
| LIST +argument | -ERR |
| NOOP | +OK |
| RSET | +OK |
| QUIT | +OK then closes the TCP connection |

All of the other commands will generate the "-Err" in the local transaction state. An autologout timer will run in the local transaction state such that if there is no data on the TCP connection for ten minutes the interface will drop the TCP connection.

If in the transaction relay state a connection cannot be made to the server, or the TCP connections to the server closes at any time, the associated TCP connection to the client will be closed. Similarly, if the TCP connection to the client from the interface closes, then the associated TCP connection to the server is closed.

### SECOND EMBODIMENT

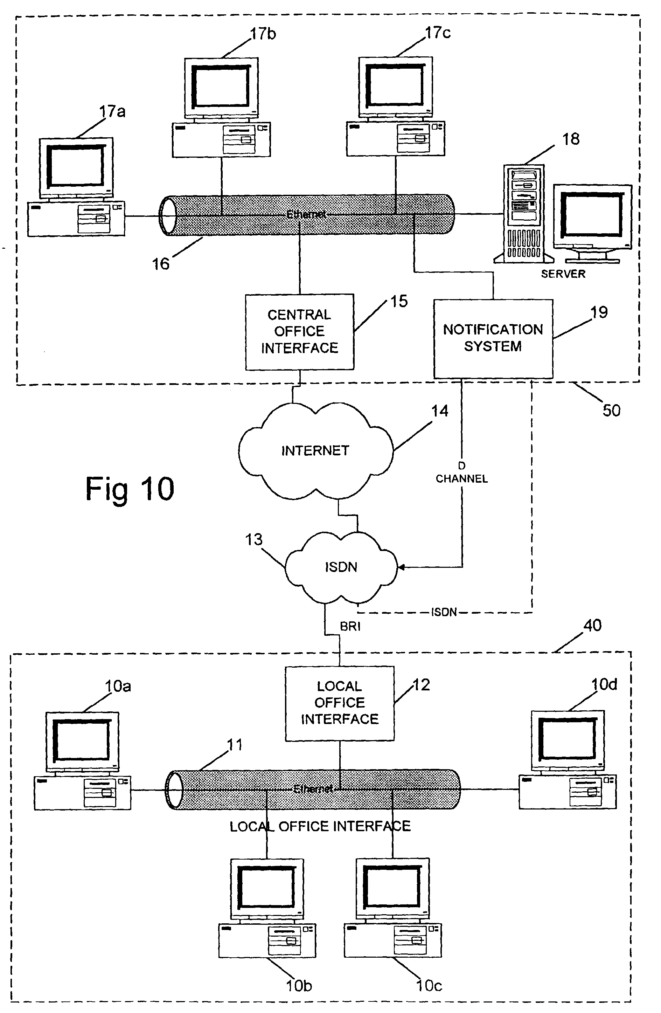

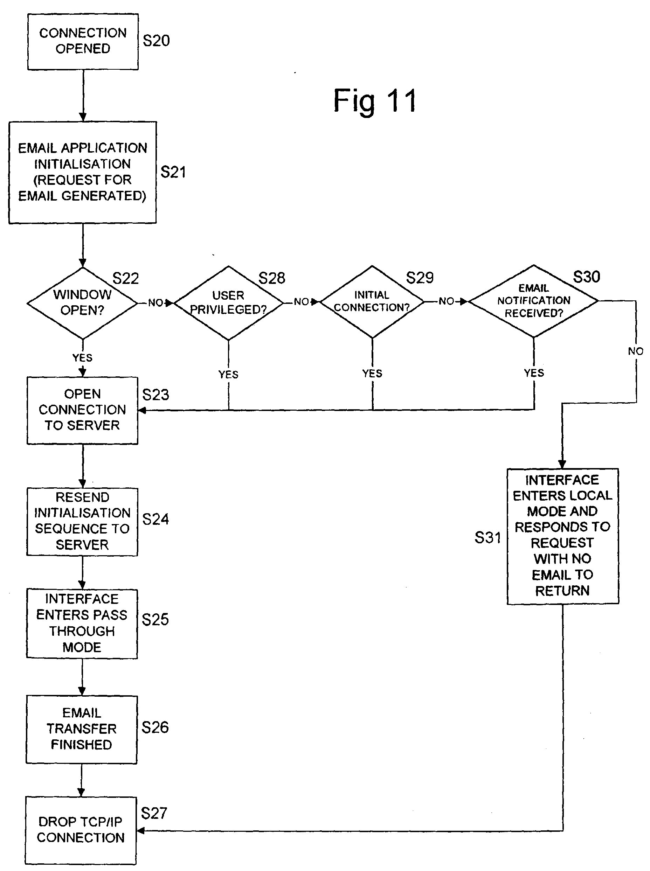

A second embodiment of the present invention will now be described with reference to Figures 10 and 11.

This embodiment of the present invention is similar to the first embodiment except that a notification system 19 is provided in association with the server 18 for generating notification that email is available on the server 18 for downloading by the clients 10a, 10b, 10c and 10d in the local office 40. Figure 10 illustrates this embodiment in which the reference numerals correspond to the reference numerals used in the first embodiment. In this embodiment, a notification system 19 is connected over the LAN 16 to the server 18 and is able to determine when email is available on the server 18 for downloading by a client. Email is usually directed to a specific user who may use any email client. A notification system will use knowledge of the likely location of the user to determine whether a notification signal needs to be transmitted to the user using a machine in the local office 40.

In Figure 10 the notification system is connected to the ISDN network 13 via a D channel of the ISDN network which uses the X25 packet switching protocol. This enables the notification system to pass the notification signal via the D channel to the local office interface 12 without having to make an ISDN connection. Using the D channel it is possible to pass notification information using a SETUP message with data in the sub-address to indicate it is a notification only and it should be answered. The local office interface 12 can then record receipt of the notification of email for users and when a request for email is received from a user, a request is allowed to pass even though the window may be closed. Thus the regular polling by an email client operated by a user will result in the rapid retrieval of email when there is email to be retrieved from the server 18.

Figure 11 is a flow diagram illustrating the operation of this embodiment of the present invention.

In step S20 an email client opens a connection. The email application then carries out an initialisation sequence which includes the generation of a request for email in step S21. In step S22 it is then determined whether the window is open. If it is open, in step S23 a connection is opened to the server. If not, in step S28 it is determined whether the user identified in the request is privileged. If so, in step S23 a connection is opened to the server and if not, it is then determined whether this is an initial connection after a predetermined period of time in step S29. If so, in step S23 a connection is opened to the server. If not, in step S30 it is determined whether an email notification has been received from the server for the user. If so, in step S23 a connection is opened to the server. If not, in step S31 the interface enters a local mode and responds to the request with no email to return and the TCP/IP connection is then dropped in step S27.

Once a connection is made to the server in step S23, because the interface has received the initialisation sequence, this has to be resent to the server in step S24. The interface then enters a pass through mode in step S25 wherein it relays email requests and email data. In step S26, once the email transfer is finished, in step S27 the TCP/IP connection is dropped.

As an alternative to using the D channel, as can be seen in Figure 10, it is also possible for the notification system 19 to use an ISDN connection via the ISDN network 13 to the local office interface 12 in order to pass the notification signal. This requires the notification system 19 to make a connection over the ISDN network. This of course requires information on the location of the local office interface 12. This technique is less advantageous than using the D channel because a connection charge is incurred when a connection is made. The use of the D channel does not incur a connection charge since the D channel is a control channel which is always available without having to make a connection. It does however incur a charge for the passage of data but this is less than that incurred in using the B channels.

### OTHER EMBODIMENTS AND MODIFICATIONS

The use of the notification system has been described in the second embodiment with reference to the automatic opening of a channel to allow a user to request email, and this can cause the automatic requesting and retrieval of email for the client. This can either be carried out by the interface 12 or a signal can be transmitted over the local area network 11 to the client 10a, 10b, 10c or 10d to initiate the automatic generation of a request which is passed by the local office interface 12 to the server 18 causing the retrieval of the notified email.

Alternatively, the notification of email can be used to generate an indication to a user that email is waiting at the server 18. This is thus passed on to the client. The indication given to the user can be visual or audible, e.g. a screen display or audible noise.

In another embodiment, instead of a local office being remote from the server, a single user is remote from the server and the notification system dials a telephone number associated with the user. This can be done either using a standard PSTN line or an ISDN line. This can cause a particular type of ring at the telephone to indicate to the user that email is waiting to be downloaded from the server.

Although in the embodiments described the server is described as comprising a server at a central office of a company, the present invention is not limited to this particular configuration. The present invention is applicable to an arrangement wherein the server is maintained by an Internet Service Provider (ISP). Further, the present invention is applicable to accessing the server either from a remote office, or using a single computer with an appropriate interface.

The interface can be an interface between a computer and a communications line of any form. For example, the interface can comprise an ISDN terminal adaptor, a LAN router, a leased line interface, or even a modem.

In the embodiments, request for email are addressed to the interface which then translates the address and relays the request to the server if the request is to be allowed to pass through the interface. When email is retrieved in response to the request, it is addressed to the interface which receives it and translates the address to the client address so that it can be relayed from the interface to the client. The present invention is not however limited to this relaying method and another embodiment of the present invention uses an interception technique. In this technique the requests for email are addressed to the server and are intercepted by the interface. The interface needs to identify whether the request Is an email request. If only the time window technique is used for controlling the package of email requests, no further analysis of the received request needs to take place. It is either relayed or responded to with a spoof response. If a privileged user technique or a technique to allow a user to immediately collect email first thing in the morning is used, it is also necessary for the interface to determine the identity of the user making the request. Thus the interfaces needs to intercept the requests and to determine whether to allow the requests to pass or whether to respond with a spoof response.

In the embodiments, in order for client requests to be transmitted to the server, a connection has to be made. The interface of the present invention can also detect whether a connection is already made and if so the request can be sent irrespective of any window function. A connection can be made between the clients and the server for purposes other than the retrieval of information such as email e.g. a worldwide web connection or a file transfer protocol connection (FTP). The duration of the connection will be increased but no connection charge will be incurred. Using such a technique, in order to further reduce connection charges, the times at which requests were sent and responded to can be monitored and the time at which the window is next opened can be controlled accordingly, e.g. if a client has made a successful request during a connection, the time when the window next opens for the client may be delayed to be the same period as between opening of the window.

In addition to or instead of using the internet, the present invention is equally applicable to corporate intranets.

The functionality of the present invention can be incorporated in a conventional interface, i.e. a LAN router, an ISDN terminal adapter, a modem or a leased line interface by suitably programming the processing unit within the interface to operate in accordance with a new set of instructions. The present invention can thus be embodied as processor instructions stored on a storage medium. For example, a prior art interface device with sufficient capability can be upgraded to implement the functionality of the present invention by a software upgrade. Such a software upgrade can be provided by providing a storage media, e.g. floppy disk, CD Rom, or other memory device which can be read by a computer to download the code onto the interface. Because the computer code can be downloaded in an electronic form, the present invention can thus be embodied as a signal carrying the computer code.

Although the present invention has been described hereinabove with reference to specific embodiments, the present invention is not limited to the specific embodiment and modifications will be apparent to a skilled person in the art which lie within the spirit and scope of the present invention.

## Claims

1. Interface apparatus for interfacing one or more client apparatus to a server apparatus over a communications line, the apparatus comprising:
receiving means for receiving a request for information from at least one said client apparatus;
controlling means for controlling the passage of the request to said server apparatus in accordance with predetermined criteria; and
responding means for responding to the request from a said client by generating a response indicating no information is available when said controlling means prevents the passage of the request to said server apparatus.

2. Interface apparatus according to claim 1, wherein each client apparatus polls said server regularly to request information, and said controlling means is adapted to control the passage of said request from at least one said client apparatus to said server apparatus in accordance with a predetermined pattern in time.

3. Interface apparatus according to claim 2, wherein one or more said client apparatus has a privileged status and said controlling means is adapted to control the passage of requests from the privileged client apparatus to said server apparatus to allow the requested to pass independently of the time pattern.

4. Interface apparatus according to any preceding claim including logging means for logging previous successful requests by the user of the or each client apparatus, wherein said controlling means is adapted to allow a request to pass to said server apparatus when the request is made a predetermined period of time after the most recent successful request by said client apparatus or for the first time in a period of time.

5. Interface apparatus according to any preceding claim including detecting means for detecting a communications connection made using said communications line, said controlling means being adapted to allow the passage of requests to said server apparatus when a said communication connection is detected by said detecting means.

6. Interface apparatus according to any preceding claim wherein said receiving means is adapted to receive the requests addressed to the interface apparatus, the apparatus including address translating means for translating the address of the requests to the address of said server apparatus when said controlling means allows the passage of the requests to said server apparatus, and for translating the address of origin of responses generated by said responding means to the address of said server apparatus.

7. Interface apparatus according to any one of claims 1 to 5, wherein said receiving means is adapted to receive requests addressed to said server apparatus.

8. Interface apparatus according to any preceding claim including notification receiving means for receiving notifications that information is available from said server apparatus for a user of one or more of said client apparatus, said controlling means being responsive to said notification receiving means to allow requests to pass to said server apparatus from said client apparatus the subject of the received notifications.

9. Interface apparatus according to any preceding claim wherein said receiving means includes a local area network interface for receiving requests from a plurality of said client apparatus connected over said local area network.

10. Interface apparatus according to any preceding claim including a communications line interface.

11. Interface apparatus according to claim 10, wherein said communication interface comprises an ISDN interface and said communications line comprises an ISDN line.

12. Interface apparatus according to any preceding claims including means for receiving external configuration data and for configuring said predetermined criteria used by said controlling means using said configuration data.

13. Interface apparatus according to any preceding claim, wherein said receiving means is adapted to receive requests for electronic mail and said responding means is adapted to respond to requests by indicating that the user of the client apparatus making the request has no electronic mail waiting at said server apparatus.

14. A method of interfacing one or more clients to a server over a communications line, the method comprising:
receiving a request for information from at least one said client;
controlling the passage of the request to said server in accordance with predetermined criteria; and
responding to the request from a said client by generating a response indicating that no information is available when the passage of the request to said server is prevented by said controlling step.

15. A method according to claim 14, wherein each client polls said server regularly to request intonation, and the passage of requests from at least one said client to said server is controlled in accordance with a predetermined pattern in time.

16. A method according to claim 15, wherein one or more of said client has a privileged status and the passage of requests from the privileged client to said server is allowed independently of the time pattern.

17. A method according to any one of claims 14 to 16 including logging previous successful requests for information by the user of the or each client, wherein a request is allowed to pass to said server when the request is made a predetermined period of time after the most recent successful request by said client or for the first time in a period of time.

18. A method according to any one of claims 14 to 17 including detecting a communications connection made using said communications line, wherein the passage of requests to said server is allowed when a said communications connection is detected.

19. A method according to any one of claims 14 to 18, implemented by interface wherein requests addressed to said interface apparatus are received, the forwarding addresses of the received requests are translated to the address of said server when the requests are to be allowed to pass to said server apparatus, and the address of origin of responses generated when the request are not allowed to pass to said server are translated to the address of said server.

20. A method according to any one of claims 14 to 18, wherein requests are received addressed to said server.

21. A method according to any one of claims 14 to 20, including receiving notifications that information is available from said server for a user of one or more of said client, wherein requests from said client the subject of the received notifications are allowed to pass to said server.

22. A method according to any one of claims 14 to 21, wherein the requests are received over a local area network from a plurality of said client apparatus connected over said local are network.

23. A method according to any one of claims 14 to 22,. wherein said communications line comprises an ISDN line.

24. A method according to any one of claims 14 to 23, including receiving external configuration data for configuring said predetermined criteria.

25. A method according to any one of claims 14 to 24, wherein said requests comprise requests for electronic mail, said server comprises an electronic mail server, and the response generated in said responding step indicates that the user of client apparatus making the request has no electronic mail waiting at said server apparatus.

26. A communications interface for interfacing one or more clients to a server over a communications line, the interface comprising:
a client port for receiving a request for information from at least one client;
a communications port for connection to said communications line to transmit requests to said server and receive responses therefrom;
a processor operating in accordance with stored instructions to control the passage of requests to said server in accordance with predetermined criteria and to generate a response to a request from a said client which indicates that no information is available when the passage of the request to said server is prevented in accordance with said predetermined criteria.

27. A communication interface according to claim 26, wherein said stored instructions include instructions to control the processor to control the passage of said request from said client to said server in accordance with a predetermined pattern of time.

28. A communications interface according to claim 27, wherein said stored instructions include instructions to control the processor to control the passage of requests from at least one said client the user of which has a privileged status to said server independently of the time pattern.

29. A communications interface according to any one of claims 26 to 28, wherein said stored instructions include instructions to control the processor to log previously successful requests by the user of the or each client, and to pass to allow a request to pass to said server when the request is made a predetermined period of time after the most recent successful request by the user of said client.

30. A communications interface according to any one of claims 26 to 28, wherein said communications port can detect when a connection is made using the communications line, and said stored instructions include instructions to control the processor to allow the passage of requests to said server when a said connection is detected by said communications port.

31. A communications interface according to any one of claims 26 to 30, wherein said client port is arranged to receive requests addressed to said interface and said stored instructions include instructions to control the processor to translate the address of the requests to the address of said server when the passage of the request to said server is allowed, and to translate the address of origin of responses to said client to the address of said server when the passage of the requests to said server is prevented.

32. A communications interface according to any one of claims 26 to 31, wherein said communications port is arranged to receive notifications that information is available from said server for a user of one or more of said clients, and said stored instructions include instructions to control the processor to allow requests to pass to said server from said clients the subject of the received notifications.

33. A communications interface according to any one of claims 26 to 32, wherein said client port comprises a local area network interface for receiving requests from a plurality of said clients connected over said local area network.

34. A communications interface according to any one of claims 26 to 33 wherein said communications port comprises an ISDN interface and said communications line comprises an ISDN line.

35. A communications interface according to any one of claims 26 to 34, wherein said client port or said communications port can receive configuration data, and said stored instructions include instructions for controlling the processor to configure said predetermined criteria using said configuration data.

36. A storage medium carrying processor implementable instructions for controlling a processor in an interface apparatus having a connection to at least one client apparatus and a connection over a communications line to a server apparatus to carry out the method of any one of claims 14 to 25.

37. A signal carrying processor implementable instructions for controlling a processor in an interface apparatus having a connection to at least one client apparatus and a connection over a communications line to a server apparatus to carry out the method of any one of claims 14 to 25.

38. Processor implementable instructions for controlling a processor in an interface apparatus having a connection to at least one client and a connection over a communications line to a server to carry out the method of any one of claims 14 to 25.
